# EUROPÄISCHE PATENTSCHRIFT

(11) **EP 3 367 142 B1**
(45) Veröffentlichungstag und Bekanntmachung des Hinweises auf die Patenterteilung: **21.08.2024**
(21) Anmeldenummer: 18158058.0
(22) Anmeldetag: 22.02.2018
(51) Int. Cl.: G02B 5/30, G02B 27/01

(54) **KOPF-OBEN-ANZEIGEVORRICHTUNG FÜR EIN KRAFTFAHRZEUG, KRAFTFAHRZEUG UND VERFAHREN ZUM ANZEIGEN EINER ANZEIGE**
MOTOR VEHICLE AND HEAD-UP DISPLAY DEVICE FOR A MOTOR VEHICLE, AND METHOD FOR DISPLAYING A DISPLAY
AFFICHAGE TÊTE HAUTE POUR UN VÉHICULE AUTOMOBILE, VÉHICULE AUTOMOBILE ET PROCÉDÉ D'AFFICHAGE D'UN AFFICHAGE

(30) Priorität: 23.02.2017 DE 102017103712
(43) Veröffentlichungstag der Anmeldung: 29.08.2018
(73) Patentinhaber: Valeo Schalter und Sensoren GmbH, 74321 Bietigheim-Bissingen (DE)
(72) Erfinder: Kuntze, Daniel, 74321 Bietigheim-Bissingen (DE); Simonis, Karl, 74321 Bietigheim-Bissingen (DE); Schoch, Lars, 74321 Bietigheim-Bissingen (DE)
(74) Vertreter: Pothmann, Karsten

(56) Entgegenhaltungen:
- DE-A1- 102005 020 233
- DE-A1- 102014 209 824
- DE-A1- 102014 211 339

## Beschreibung

Die Erfindung betrifft eine Kopf-oben-Anzeigevorrichtung für ein Kraftfahrzeug, die eine Bildgebeeinheit aufweist, welche zum Bereitstellen einer Anzeige dazu ausgelegt ist, Licht zu emittieren. Weiterhin weist die Kopf-oben-Anzeigevorrichtung ein Gehäuse auf, in welchem die Bildgebeeinheit angeordnet ist, wobei das Gehäuse ein transparentes Deckelement aufweist, welches zur Transmission des durch die Bildgebeeinheit emittierten Lichtes ausgebildet ist, und wobei die Kopf-oben-Anzeigevorrichtung derart eingerichtet ist, dass zum Anzeigen der durch die Bildgebeeinheit bereitgestellten Anzeige das von der Bildgebeeinheit emittierte Licht zumindest zum Teil durch das Deckelement transmittiert wird. Die Erfindung betrifft auch ein Kraftfahrzeug mit einer Kopf-oben-Anzeigevorrichtung und ein Verfahren zum Anzeigen einer Anzeige in einem Kraftfahrzeug mittels einer Kopf-oben-Anzeigevorrichtung.

Das Interesse richtet sich vorliegend auf Anzeigevorrichtungen für Kraftfahrzeuge, die als Kopf-oben-Anzeigevorrichtungen beziehungsweise als Head-up-Displays ausgebildet sind. Eine derartige Anzeigevorrichtung umfasst üblicherweise eine Bilderzeugungseinrichtung beziehungsweise Bildgebeeinheit, mit der Licht zum Bereitstellen einer Anzeige oder eines Bildes abgestrahlt werden kann. Üblicherweise kann eine solche Anzeigevorrichtung auch eine Optikeinrichtung, wie beispielsweise Reflektoren beziehungsweise Spiegel, aufweisen, mit welcher das von der Bildgebeeinheit abgestrahlte Licht auf ein Anzeigeelement projiziert werden kann. Dieses Anzeigeelement ist bei sogenannten Windschutzscheiben-Head-up-Displays durch einen Bereich der Windschutzscheibe des Kraftfahrzeugs bereitgestellt. Ferner sind Anzeigevorrichtungen bekannt, die ein separates Anzeigeelement mit einer semitransparenten Spiegelfläche aufweisen. Solche Head-up-Displays werden üblicherweise auch als Combiner-Head-up-Displays bezeichnet. Die vorliegende Erfindung ist auf dem Gebiet der Windschutzscheiben-Head-up-Displays angesiedelt.

Bei Windschutzscheiben-Head-Up-Displays wird zum Schutz vor Staub oder anderen Verschmutzungen üblicherweise ein transparentes Deckglas eingesetzt und das Windschutzscheiben-Head-Up-Display so verschlossen. Das Deckglas ist transparent, damit das Licht der Bilderzeugungseinheit beziehungsweise Bildgebeeinheit durch das Deckglas zur Windschutzscheibe projiziert werden kann. Sowohl bei der Transmission durch das Deckglas, als auch bei der Reflexion des Lichts an der Windschutzscheibe sind unweigerlich immer Lichtverluste zu verzeichnen. Um eine ausreichende Sichtbarkeit der anzuzeigenden Anzeige zu ermöglichen, muss entsprechend viel Leistung durch die Bilderzeugungseinrichtung bereitgestellt werden. Daher wäre es wünschenswert, die Lichtverluste bei einer Kopf oben Anzeige Einrichtung reduzieren zu können, wodurch entsprechend auch Leistung der Bilderzeugungseinrichtung eingespart werden könnte.

Die DE 10 2005 020 233 A1 offenbart ein Head-Up-Display, bestehend aus einer Einrichtung zur Bilderzeugung, einer Abbildungsoptik und einer Windschutzscheibe, welche Strahlenbündel eines Bildes in Richtung eines Fahrers lenkt. Das Head-Up-Display ist dadurch gekennzeichnet, dass zwischen der Windschutzscheibe und der Einrichtung zur Bilderzeugung ein Linear-Polarisator angeordnet ist, dessen Polarisationsrichtung so eingestellt ist, dass die Lichtabsorption nur für Licht minimiert wird, dessen E-Vektor relativ zur Spiegelung an der Windschutzscheibe s-polarisiert ist.

Die DE 10 2014 209 824 A1 offenbart eine Projektionsvorrichtung für ein Head-up-Display mit einer Bildgebungseinrichtung, die zur Erzeugung eines Bildes ausgebildet ist, wobei die Projektionsvorrichtung dazu ausgebildet ist, das von der Bildgebungseinrichtung erzeugte Bild auf eine Projektionsfläche zu projizieren. Um möglichst scharfe, insbesondere möglichst doppelbildfreie, Bilder zu erhalten, weist die Projektionsvorrichtung ein oder mehrere polarisationsdrehende Elemente auf.

Die DE 10 2014 211 339 A1 offenbart einen Frontscheibenprojektor für ein Fahrzeug. Der Frontscheibenprojektor, beispielsweise ein Head-Up-Display, umfasst eine optische Diode mit einem polarisierenden Spiegel, einer optische Verzögerungsplatte und einem weiteren Spiegel. Der polarisierende Spiegel ist ausgeführt, Lichtstrahlen einer ersten linearen Polarisationsrichtung zu reflektieren und Lichtstrahlen einer zweiten linearen Polarisationsrichtung zu transmittieren. Ferner ist die optische Verzögerungsplatte ausgeführt ist, die an dem polarisierenden Spiegel reflektierten Lichtstrahlen der ersten linearen Polarisationsrichtung zirkular zu polarisieren, so dass erste zirkular polarisierte Lichtstrahlen entstehen.

Die JP 2008/070504 (A) beschreibt eine gattungsbildende Kopf-oben-Anzeigevorrichtung mit einem Licht emittierenden Display, welches einen ersten Polarisator aufweist, einem ersten Reflektor mit einer Verzögerungsplatte, welcher das vom Display emittierte Licht auf einen zweiten Reflektor lenkt, der dieses Licht wiederum auf ein Fenster mit einem Polarisator lenkt. Zielsetzung hierbei ist die Reduktion der Entstehung von Geisterbildern. Jedoch gerade die Verwendung von Polarisatoren, die bestimmte polarisierte Lichtanteile filtern oder absorbieren, führen nachteiligerweise zu weiteren Lichtverlusten.

Aufgabe der vorliegenden Erfindung ist es, eine Kopf-oben-Anzeigevorrichtung, ein Kraftfahrzeug und ein Verfahren zum Anzeigen einer Anzeige mittels einer Kopf-oben-Anzeigevorrichtung bereitzustellen, welche eine Reduktion von Lichtverlusten ermöglichen.

Diese Aufgabe wird gelöst durch eine Kopf-oben-Anzeigevorrichtung, durch ein Kraftfahrzeug sowie durch ein Verfahren zum Anzeigen einer Anzeige in einem Kraftfahrzeug mittels einer Kopf-oben-Anzeigevorrichtung mit den Merkmalen gemäß den jeweiligen unabhängigen Ansprüchen. Vorteilhafte Ausgestaltungen der Erfindung sind Gegenstand der abhängigen Patentansprüche, der Beschreibung sowie der Figuren.

Eine erfindungsgemäße Kopf-oben-Anzeigevorrichtung für ein Kraftfahrzeug weist eine Bildgebeeinheit auf, welche zum Bereitstellen einer Anzeige dazu ausgelegt ist, Licht zu emittieren. Weiterhin weist die Kopf-oben-Anzeigevorrichtung ein Gehäuse auf, in welchem die Bildgebeeinheit angeordnet ist, wobei das Gehäuse ein transparentes Deckelement aufweist, welches zur Transmission des durch die Bildgebeeinheit emittierten Lichts ausgebildet ist. Zudem ist die Kopf-oben-Anzeigevorrichtung derart eingerichtet, dass zum Anzeigen der durch die Bildgebeeinheit bereitgestellten Anzeige das von der Bildgebeeinheit emittierte Licht zumindest zum Teil durch das Deckelement transmittiert wird. Des Weiteren ist die Bildgebeeinheit dazu ausgebildet, zum Bereitstellen der Anzeige das Licht zumindest zum Großteil als p-polarisiertes Licht mit Bezug auf das Deckelement zu emittieren, wobei das Deckelement dazu ausgebildet ist, das von der Bildgebeeinheit emittierte p-polarisierte Licht beim Transmittieren zumindest zum Großteil in s-polarisiertes Licht zu wandeln. Die Bezeichnungen p- und s-Polarisation beziehen sich hierbei insbesondere auf die Einfallsebene mit Bezug auf den Lichteinfall des durch die Bildgebeeinheit bereitgestellten Lichts auf das Deckelement.

Die Erfindung beruht dabei auf mehreren Erkenntnissen. Zum einen stellt die s-Polarisation eine für den Reflex an der Windschutzscheibe besonders günstige Polarisationsrichtung des Lichts dar. Würde jedoch gleich durch die Bildgebeeinheit s-polarisiertes Licht bereitgestellt werden, wären besonders hohe Lichtverluste bei der Transmission durch ein übliches Deckglas zu verzeichnen, vor allem in Einfallswinkelbereichen zwischen 30 und 50°, die für s-Polarisation einen Rückreflex von bis zu 20 % nach sich ziehen. Erfindungsgemäß wird dagegen durch die Bildgebeeinheit p-polarisiertes Licht bereitgestellt,, wodurch es ermöglicht wird, dass dieses p-polarisierte Licht, wenn dieses durch das Deckelement transmittiert wird nun mit bis zu 99 % transmittiert werden kann. Dadurch kann die Effizienz der Kopf-oben-Anzeigevorrichtung um bis zu 20 % gesteigert werden, wodurch wiederum vorteilhafterweise Leistung für die Bildgebeeinheit eingespart werden kann. Da jedoch dieses durch die Bildgebeeinheit emittierte p-polarisierte Licht für die Reflexion an der Windschutzscheibe nachteilig wäre, besteht ein besonders großer weiterer Vorteil der Erfindung darin, dass das Deckelement dazu ausgebildet ist, das von der Bildgebeeinheit emittierte p-polarisierte Licht beim Transmittieren zumindest zum Großteil in s-polarisiertes Licht zu wandeln. So kann gleichzeitig bei der Transmission durch das Deckelement das für die Reflexion an der Windschutzscheibe günstiger s-polarisierte Licht bereitgestellt werden. Da zudem durch eine Polarisationswandlung im Gegensatz zur Polarisationsfilterung, wie dies bei Polarisatoren üblicherweise der Fall ist, keine nennenswerten Lichtverluste zu verzeichnen sind, lässt sich durch diese Erfindung ein Kopf-oben-Anzeigevorrichtung mit einer sehr hohen Licht- und Energieeffizienz bereitstellen. Zudem lässt sich dies durch besonders einfache und kostengünstige Maßnahmen umsetzten und es sich keine vielzähligen Polarisationswandler oder ineffiziente Polarisatoren erforderlich. Um dies zu bewerkstelligen, ist die Bereitstellung von polarisiertem Licht durch die Bildgebeeinheit und das Vorsehen eines einzigen Polarisationswandlers durch das Deckelement ausreichend.

Üblicherweise werden neben den Bezeichnungen s-Polarisation und p-Polarisation bei der Beschreibung von polarisierten Wellen bei der Reflexion beziehungsweise Transmission weitere Bezeichnungen genutzt. S-polarisiertes Licht wird auch als senkrecht polarisiertes Licht oder transversal-elektrisch polarisiertes Licht bezeichnet, bei welchem per Definition das elektrische Feld senkrecht auf der Einfallsebene, die durch die Einfallsrichtung des Lichts auf eine Oberfläche (in diesem Fall die des Deckelements), durch welche das Licht transmittiert oder von welcher dieses reflektiert wird, sowie dem Normalenvektor dieser Oberfläche am Ort des Einfalls aufgespannt wird, bezeichnet. Analog wird p-polarisiertes Licht auch als parallel polarisiertes Licht oder transversalmagnetisch polarisiertes Licht bezeichnet, bei welchem die Schwingungsebene des magnetischen Feldes senkrecht zu der Lichteinfallsebene, d.h. der durch Einfallsvektor und Flächennormalen aufgespannten Ebene, steht.

Die Bildgebeeinheit kann beispielsweise ein Display, wie ein LCD-Display oder TFT-LCD-Display umfassen. Solche LCD-Displays können auf besonders einfache Weise dazu genutzt werden, Licht mit einer bestimmten Polarisationsrichtung bereitzustellen, da diese üblicherweise sowieso Polarisationsfilter aufweisen. Vorzugsweise emittiert die Bildgebeeinheit p-polarisiertes Licht nicht nur zum Großteil, sondern vorzugsweise im Wesentlichen ausschließlich, zum Beispiel mindestens zu 80 %, insbesondere mindestens zu 90 %, oder auch mindestens zu 99 %.

Um das Deckelement zum Wandeln des durch die Bildgebeeinheit bereitgestellten p-polarisierten Lichts auszubilden, stellt es eine nicht beanspruchte Ausgestaltung dar, wenn das Deckelement ein Grundelement mit einem als eine polarisationswandelnde Beschichtung des Grundelements ausgebildeten Polarisationswandler aufweist. Die polarisationswandelnde Beschichtung kann als polarisationswandelnde Folie ausgebildet sein, die auf dieses Grundelement auflaminiert werden kann. Solche polarisationswandelnde Beschichtungen oder Folien sind aus dem Stand der Technik bekannt. Hierzu können beispielsweise λ/2-Verzögerung Folien, wie zum Beispiel ITOS WP280 HE genutzt werden.

Nicht Teil der Erfindung ist es, wenn die polarisationswandelnde Beschichtung als Polycarbonat-Folie ausgebildet ist, die auf das Grundelement auflamiert werden kann. Interessanterweise haben typische PC-Folien durch ihren Herstellungsprozess diese Eigenschaft zum Drehen der Polarisation "inclusive", wenn diese in vorbestimmter Weise mit Bezug auf die Einfallsebene ausgerichtet werden. Durch das Extrudieren/Recken der Folien entsteht eine Ausrichtung der Moleküle, die zu diesem Effekt führt. PC-Folien können auf besonders einfache und kostengünstige Weise hergestellt werden, sodass auch die Ausbildung der Beschichtung als Polycarbonat-Folie besonders vorteilhaft ist. So kann vorteilhafterweise eine PC-Folie zur Polarisationswandlung gemäß einer λ/2-Verzögerung genutzt werden.

Weiterhin weist gemäß einer nicht beanspruchten Ausgestaltung die polarisationswandelnde Beschichtung in einer Lichttransmissionsrichtung, in welcher das durch die Bildgebeeinheit emittierte Licht durch das Deckelement transmittiert wird, eine Dicke zwischen 30 µm und 40 µm auf. Durch eine derart dünne Beschichtung kann die polarisationswandelnde Wirkung mit besonders hoher Effizienz erzielt werden.

Dabei ist es vorteilhaft, wenn die polarisationswandelnde Beschichtung auf einer einem Innenraum des Gehäuses abgewandten Seite des Grundelements angeordnet ist. Hierdurch wird es vorteilhafterweise ermöglicht, dass das auf das Grundelement auftreffende p-polarisierte Licht zunächst durch das transparente Grundelement transmittiert wird und erst nach der Transmission des Grundelements in das für die Windschutzscheibe günstiger s-polarisierte Licht gewandelt wird, so dass die günstigen Transmissionseigenschaften des p-polarisierten Lichts genutzt werden können. Zudem erfolgt hierdurch die Drehung der Polarisation erst nach Austritt aus dem Grundelement beziehungsweise dem Deckelement, da hier die Phasenverschiebung erfolgt. Dies wiederum reduziert mögliche Doppelbilder, da auch der Anteil an Total-Reflexion beim Übergang vom Deckelement zu Luft für p-polarisiertes Licht sehr klein ist.

Das Grundelement kann beispielsweise aus Polycarbonat (PC) und/oder Polymethylmethacrylat (PMMA) ausgebildet sein. Eine Ausbildung aus PMMA ist dabei besonders vorteilhaft, da dieses Material keine Eigenspannungen aufweist und damit die Polarisation nicht weiter beeinflusst.

Die Erfindung sieht vor, dass das Deckelement als Ganzes als Polarisationswandler ausgebildet ist. Das Deckelement kann so vorteilhafterweise einstückig ausgebildet werden und es ist kein Beschichten oder Auflaminieren von Folien erforderlich. Hierdurch vereinfacht sich die Herstellung und auch die Kosten für das Deckelement können vorteilhafterweise reduziert werden. Besonders vorteilhaft ist dies jedoch, da hierdurch Reflexionen an Grenzflächen zwischen übereinanderliegenden Schichten vermieden werden können. Neben dem großen Vorteil in Bezug auf die damit einhergehende zusätzliche Vermeidung von Lichtverlusten, die diese Ausbildung zur Folge hat, lassen sich auch durch mehrfache Reflexionen verursachte Doppelbilder vorteilhafterweise vermeiden beziehungsweise reduzieren.

Die Erfindung sieht vor dass, das Deckelement als Polycarbonat-Folie ausgebildet ist, sein, welche im Folgenden als PC-Folie bezeichnet wird. PC-Folien können auf besonders einfache und kostengünstige Weise hergestellt werden, sodass auch die Ausbildung des Deckelements als Polycarbonat-Folie besonders vorteilhaft ist. So kann vorteilhafterweise eine PC-Folie gleichzeitig als Deckelement und zur Polarisationswandlung gemäß einer λ/2-Verzögerung genutzt werden.

Bei einer weiteren vorteilhaften Ausgestaltung der Erfindung weist das Deckelement in einer Lichttransmissionsrichtung, in welcher das durch die Bildgebeeinheit emittierte Licht durch das Deckelement transmittiert wird, eine Dicke zwischen 200 µm und 400 µm auf. Eine derart dünne Ausbildung des Deckelement beziehungsweise der PC-Folie ist bereits ausreichend um genügend Stabilität als Deckelement bereitzustellen. Eine derart dünne Folie ermöglicht zudem besonders viel Flexibilität in Bezug auf ihre Formgebung und ermöglicht zum Beispiel auf besonders vorteilhafte Weise auch eine gekrümmte Ausbildung des Deckelements. Die polarisationswandelnde PC-Folie kann beispielsweise mit einer Dicke von 375 µm ausgebildet sein. Allerdings eignen sich auch dünnere Folien, beispielsweise im Bereich zwischen 30 und 40 µm, die mit geeigneten und bekannten optischen Klebern verstärkt werden können, um die nötige Stabilität bereitzustellen.

Zudem können auf dem Deckelement, zum Beispiel auf einer dem Innenraum der Gehäuses zugewandten Seite und/oder der dieser gegenüberliegenden Seite des Deckelements optional weitere Schichten oder Beschichtungen angeordnet sein, wie zum Beispiel eine Kratzschicht und/oder einer Antireflexions-Schicht.

Bei einer weiteren vorteilhaften Ausgestaltung der Erfindung ist das Deckelement in einer ersten Orientierung mit Bezug auf eine Lichteinfallsebene orientiert, sodass eine optische Achse und/oder schnelle Achse des Polarisationswandlers um einen vorbestimmten ersten Winkel in einem Winkelbereich zwischen 40° und 50°, besonders bevorzugt 45°, gegenüber der Lichteinfallsebene geneigt ist.

Wie eingangs definiert stellt die Lichteinfallsebene die Ebene dar, die durch die Lichteinfallsrichtung des auf das Deckelement einfallenden und durch die Bildgebeeinheit bereitgestellten Lichts und dem Normalenvektor des Deckelements am Ort des Lichteinfalls aufgespannt wird. Bei dem Polarisationswandler, wie beispielsweise Verzögerungsplatten, Verzögerungsfolien sowie der beschriebenen Polycarbonat-Folie, handelt es sich um optisch anisotropes Material, welches für unterschiedlich polarisiertes Licht verschiedene Ausbreitungsgeschwindigkeiten in verschiedene Richtungen aufweist. Oft verwendete Materialien sind optisch einachsig, d.h., es gibt zwei zueinander senkrechte Achsen, entlang derer sich die Brechungsindices unterscheiden. Die Schwingungsrichtung des Lichts, bei der eine Welle die größere Ausbreitungsgeschwindigkeit hat, heißt schnelle Achse, die dazu senkrecht stehende Richtung entsprechende langsame Achse. Beispielsweise wird an käuflich erhältlichen Verzögerungsplatten üblicherweise die schnelle Achse markiert, sodass die Ausrichtung genau festgelegt werden kann. Vorteilhaft ist es nun zum einen, wenn die Ausrichtung des Deckelements beziehungsweise dessen Orientierung dergestalt in Bezug auf die Einfallsebene ist, dass der Anteil des p-polarisierten Lichts, welches in s-polarisiertes Licht gewandelt wird, maximal ist. Hierdurch lässt sich vorteilhafterweise eine maximale Lichteffizienz erzielen. Dies wird typischerweise bei einem Ausrichtungswinkel der optischen Achse des Polarisationwandlers im Winkel von 45° erreicht. Aber bereits auch bei Winkeln in einem Winkelbereich zwischen 40° und 50° ist der gewandelte Anteil an s-polarisiertem Licht hoch genug, so dass die Lichtverluste bezüglich der nachfolgenden Reflexion an der Windschutzscheibe noch äußerst gering sind.

Andererseits kann es von Vorteil sein, das als Polarisationswandler ausgebildete Deckelement nicht unter 45°, sondern um einen, vorzugsweise kleinen, verschiedenen Winkel dazu, zum Beispiel auch in einem Winkelbereich zwischen 30° und 40° oder zwischen 50 und 60° orientiert ist. Daher ist es gemäß einer weiteren Ausgestaltung der Erfindung vorgesehen, dass das Deckelement in einer zweiten Orientierung mit Bezug auf eine Lichteinfallsebene orientiert ist, sodass eine optische Achse und/oder schnelle Achse des Polarisationswandlers um einen vorbestimmten zweiten Winkel in einem Winkelbereich zwischen 30° und 40° oder zwischen 50° und 60° gegenüber der Lichteinfallsebene geneigt ist. Hierdurch wird das auf das Deckelement eintreffende p-polarisierte Licht nicht zu 100 % in s-polarisiertes Licht umgewandelt, sondern es besteht teilweise aus p- und s-polarisiertem Licht, insbesondere dennoch zu einem Großteil aus s-polarisiertem Licht. Dies führt zu einer geringfügigen Minderung der Lichteffizienz, da durch den p-polarisierten Lichtanteil eine geringere Effizienz bei der nachfolgenden Reflexion an der Windschutzscheibe erreicht werden kann. Jedoch besteht der besonders große Vorteil dieser Ausgestaltung darin, dass hierdurch eine Sichtbarkeit der letztendlich angezeigten Anzeige auch mit polarisierenden Sonnenbrillen möglich ist. Wird ausschließlich s-polarisiertes Licht durch die Windschutzscheibe reflektiert, so ist dieses reflektierte Licht beim Einsatz von polarisierenden Sonnenbrillen durch den Endbenutzer nicht mehr sichtbar, sondern wird von der Sonnenbrille absorbiert. Durch den verbleibenden Anteil an p-polarisiertem Lichts, wie dies durch diese Ausführungsform der Erfindung ermöglicht wird, wird zumindest eine geringe Sichtbarkeit der Anzeige auch mit polarisierende Sonnenbrillen ermöglicht.

Um nachfolgende Lichtverluste bei der Reflexion an der Windschutzscheibe möglichst gering zu halten, ist es bevorzugt dass der erste und/oder zweite Winkel derart bemessen ist, das mindestens 80 % des auf das Deckelement auftreffenden p-polarisierten Lichts bei der Transmission in s-polarisiertes Licht gewandelt wird, und zum Beispiel sogar mindestens 90 % oder mindestens 95% oder auch mindestens 99%.

Bei einer weiteren vorteilhaften Ausgestaltung der Erfindung ist die Kopf-oben-Anzeigevorrichtung derart eingerichtet, dass das von der Bildgebeeinheit emittierte Licht in einem Einfallswinkel zwischen 30° und 50° auf das Deckelement auftrifft. Dieser Einfallswinkel ermöglicht eine besonders günstige und flexible Einbaulage der Bildgebeeinheit und optionaler anderer optischer Komponenten. Zudem ist dieser Einfallswinkelbereich besonders günstig für p-polarisiertes Licht, welches unter solchen Einfallswinkeln mit bis zu 99 % vom Deckelement transmittiert werden kann. Demgegenüber würde s-polarisiertes Licht deutlich stärker vom Deckelement reflektiert werden, insbesondere mit bis zu 20 %. Demzufolge zeigen sich die großen Vorteile der Erfindung und ihren Ausgestaltungen gerade bei solchen Einfallswinkeln zwischen 30° und 50° auf das Deckelement.

Bei einer weiteren vorteilhaften Ausgestaltung der Erfindung weist die Kopf-oben-Anzeigevorrichtung zumindest ein optisches Element auf, insbesondere mindestens einen Reflektor, welches in einem optischen Pfad von der Bildgebeeinheit zum Deckelement angeordnet ist. Derartige Reflektoren ermöglichen zum einen eine deutlich flexiblere Ausgestaltung des optischen Pfads, was trotz zusätzlicher Komponenten eine kompaktere Ausbildung der Kopf-oben-Anzeigevorrichtung ermöglicht. Zusätzlich können solche optischen Elemente, wie Reflektoren beziehungsweise Spiegel, neben der geeigneten Umlenkung des optischen Pfads noch weitere Funktionen übernehmen. Beispielsweise kann ein solcher Reflektor als Kaltlichtspiegel ausgebildet sein, welcher die Energie des möglichen einfallenden Sonnenlichts auf das Display der Bildgebeeinheit reduziert. Zusätzlich oder alternativ kann ein solcher oder weiterer Reflektor auch als Vergrößerungsspiegel ausgebildet sein, um das von der Bildgebeeinheit bereitgestellte Bild in geeigneter Größe und Form an die Windschutzscheibe zu projizieren beziehungsweise über die Windschutzscheibe in ein Sichtfeld des Benutzers zu projizieren.

Weiterhin ist es vorteilhaft, wenn das zumindest eine optische Element derart ausgebildet ist, dass die Polarisation des von der Bildgebeeinheit emittierten p-polarisierten Lichts zumindest zum Großteil beim Durchlaufen des optischen Pfads erhalten bleibt. Die verwendeten optischen Elemente, d.h. also beispielsweise die oben genannten Reflektoren, drehen oder ändern die Polarisation des auftreffenden Lichts bei der Reflexion im Wesentlichen nicht beziehungsweise erhalten diese, insbesondere zumindest zu 90% oder mindestens 99%. Dadurch wird es vorteilhafterweise gewährleistet, dass das von der Bildgebeeinheit emittierte p-polarisierte Licht auch als p-polarisiertes Licht nach Durchlaufen des optischen Pfads innerhalb des Gehäuses und bei Reflexion durch die genannten Spiegel auch als p-polarisiertes Licht auf das Deckelement auftrifft. Die Effizienz wird somit vorteilhafterweise durch die Verwendung optische Elemente nicht beeinflusst beziehungsweise reduziert.

Des Weiteren betrifft die Erfindung auch ein Kraftfahrzeug mit einer erfindungsgemäßen Kopf-oben-Anzeigevorrichtung oder einer ihrer Ausgestaltungen. Die für die erfindungsgemäße Kopf-oben-Anzeigevorrichtung und ihren Ausgestaltungen genannten Vorteile gelten für das erfindungsgemäße Kraftfahrzeug in gleicher Weise.

Vorzugsweise weist das Kraftfahrzeug eine Windschutzscheibe auf und die Kopf-oben-Anzeigevorrichtung ist derart im Kraftfahrzeug angeordnet, dass das von der Bildgebeeinheit emittierte und durch das Deckelement transmittierte Licht auf die Windschutzscheibe trifft und zumindest zum Teil von dieser reflektiert wird. Die Erfindung und ihre Ausgestaltungsformen sind gerade bei der Ausbildung der Kopf-oben-Anzeigevorrichtung als Windschutzscheiben-Head-Up-Display besonders vorteilhaft, da Windschutzscheiben-Head-Up-Displays üblicherweise transparente Deckelemente beziehungsweise Deckgläser benötigen als Schutz vor Staub oder anderen Verschmutzungen, was bei Combiner-Head-up-Displays nicht der Fall ist. Zudem bieten Combiner Head-up-Displays durch das Vorsehen eines separaten semitransparenten Reflexionselements mehr Flexibilität bezüglich der Gestaltung, um die Probleme, die sich bei Windschutzscheiben-Head-Up-Displays in Bezug auf die Lichteffizienz ergeben, zu umgehen. Solche flexible Möglichkeiten sind bei einem Windschutzscheiben-Head-Up-Display nicht gegeben, sodass die Erfindungen oder ihre Ausgestaltungen eine besonders vorteilhafte Möglichkeit aufzeigen, wie mit solchen statischen und nicht änderbaren Gegebenheiten dennoch eine enorme Steigerung der Lichteffizienz und Energieeffizienz ermöglicht wird, insbesondere ohne die optischen Eigenschaften negativ zu beeinflussen, sondern diese sogar noch zu verbessern.

Bei einer weiteren vorteilhaften Ausgestaltung der Erfindung ist die Kopf-oben-Anzeigevorrichtung derart im Kraftfahrzeug angeordnet, dass das von der Bildgebeeinheit emittierte und durch das Deckelement transmittierte Licht zumindest zum Großteil in einem Einfallswinkel zwischen 60° und 70° auf die Windschutzscheibe trifft. Dies stellen typische Einfallswinkel für Windschutzscheiben-Head-Up-Display ist dar, da hierdurch eine Reflexion des Lichts in den Sichtbereich eines Fahrers ermöglicht wird, insbesondere bei typischen Neigungswinkeln der Windschutzscheibe. Auch hier zeigt sich wiederum der große Vorteil der Erfindung, da sich dieser Einfallswinkelbereich sehr nahe am sogenannten Bewster-Winkel befindet, bei welchem ausschließlich s-polarisiertes Licht und kein p-polarisiertes Licht reflektiert werden kann. Entsprechend ist es wiederum besonders vorteilhaft, das durch die Bildgebeeinheit bereitgestellte p-polarisierte Licht durch das Deckelement zum Großteil und insbesondere mindestens zu 80 % in s-polarisiertes Licht zu wandeln, da hierdurch die Reflexionseffizienz an der Windschutzscheibe deutlich erhöht werden kann.

Des Weiteren betrifft die Erfindung ein Verfahren zum Anzeigen einer Anzeige in einem Kraftfahrzeug mittels einer Kopf-oben-Anzeigevorrichtung, wobei eine in einem Gehäuse der Kopf-oben-Anzeigevorrichtung angeordnete Bildgebeeinheit zum Bereitstellen der Anzeige Licht emittiert, welches durch ein transparentes Deckelement des Gehäuses zumindest zum Teil transmittiert wird. Dabei emittiert die Bildgebeeinheit zum Bereitstellen der Anzeige das Licht zumindest zum Großteil als p-polarisiertes Licht und das Deckelement wandelt das von der Bildgebeeinheit emittierte p-polarisierte Licht beim Transmittieren zumindest zum Großteil in s-polarisiertes Licht.

Die für die erfindungsgemäße Kopf-oben-Anzeigevorrichtung und ihre Ausgestaltungen sowie die für das erfindungsgemäße Kraftfahrzeug und seine Ausgestaltungen genannten Merkmale, Merkmalskombinationen und deren Vorteile gelten in gleicher Weise für das erfindungsgemäße Verfahren. Zudem ermöglichen die im Zusammenhang mit der erfindungsgemäßen Kopf-oben-Anzeigevorrichtung und ihren Ausgestaltungen genannten, sowie die im Zusammenhang mit dem erfindungsgemäßen Kraftfahrzeug und seine Ausführungsformen genannten gegenständlichen Merkmale die Weiterbildung des erfindungsgemäßen Verfahrens durch weitere Verfahrensschritte.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die im Anspruchssatz definiert sind.

Dabei zeigen:
- Fig. 1: eine schematische Darstellung eines Kraftfahrzeugs mit einer Windschutzscheibe und einer Kopf-oben-Anzeigevorrichtung gemäß einem Ausführungsbeispiel der Erfindung;
- Fig. 2: eine grafische Darstellung des Transmissionsverhaltens von p-polarisiertem und s-polarisiertem Licht am Deckelement der Kopf-oben-Anzeigevorrichtung in Abhängigkeit von dem Einfallswinkel;
- Fig. 3: eine grafische Darstellung des Reflexionsverhaltens von s-polarisiertem und p-polarisiertem Licht an der Windschutzscheibe des Kraftfahrzeugs in Abhängigkeit vom Lichteinfallswinkel; und
- Fig. 4: eine grafische Darstellung der resultierenden Leuchtdichte für s-polarisiertes und p-polarisiertes Licht einer Kopf-oben-Anzeigevorrichtung in Abhängigkeit des Orientierungswinkels des Deckelements gemäß einem Ausführungsbeispiel der Erfindung.

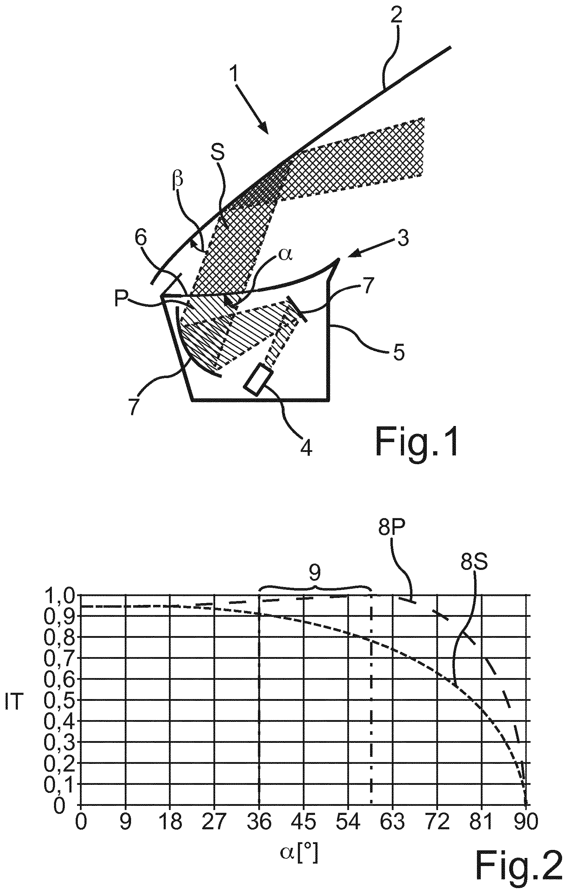

Fig. 1 zeigt eine schematische Darstellung eines Kraftfahrzeugs 1, von welchem exemplarisch und aus Gründen der Übersichtlichkeit lediglich die Windschutzscheibe 2 dargestellt ist, mit einer Kopf-oben-Anzeigevorrichtung 3 gemäß einem Ausführungsbeispiel der Erfindung. Die Kopf-oben-Anzeigevorrichtung 3 weist eine Bildgebeeinheit 4 auf, welche zum Bereitstellen einer Anzeige dazu ausgelegt ist p-polarisiertes Licht P zu emittieren. Die Bildgebeeinheit 4 beziehungsweise Bilderzeugungseinheit kann zu diesem Zweck ein Display umfassen. Weiterhin weist die Kopf-oben-Anzeigevorrichtung ein Gehäuse 5 auf, in welchem die Bildgebeeinheit 4 angeordnet ist. Bei dieser Kopf-oben-Anzeigevorrichtung 5 handelt es sich um ein Windschutzscheiben-Head-Up-Display, bei welcher das durch die Bildgebeeinheit 4 bereitgestellte Bild über die Windschutzscheibe 2 reflektiert werden soll. Um dies bewerkstelligen zu können, muss das Gehäuse 5 eine geeignete Austrittsöffnung aufweisen. Um den Innenraum des Gehäuses 5 dennoch vor Schmutz oder Staub schützen zu können, weist das Gehäuse 5 ein optisch transparentes Deckelement 6 auf.

Das durch die Bildgebeeinheit 4 bereitgestellte, insbesondere p-polarisierte, Licht P kann somit durch dieses transparente Deckelement 6 transmittiert werden und wird zumindest zum Teil nachfolgend von der Windschutzscheibe 2 in den Sichtfeldbereich eines Fahrers reflektiert. Die Kopf-oben-Anzeigevorrichtung 3 kann weiterhin optionale optische Elemente, wie in diesem Beispiel zwei Spiegel 7 aufweisen, zum Beispiel einen Kaltlichtspiegel zum Schutz vor einstrahlenden Sonnenlicht, sowie einen Vergrößerungsspiegel, zur geeigneten Vergrößerung des durch die Bildgebeeinheit 4 bereitgestellten Bildes.

Da das von der Bildgebeeinheit 4 emittierte Licht das Deckelement 6 durchlaufen muss, ist es besonders vorteilhaft, dass die Bildgebeeinheit 4 p-polarisiertes Licht P bereitstellt. Die Bildgebeeinheit 4 kann insbesondere ein Display aufweisen, wie beispielsweise ein LCD-Display, womit sich die Polarisierung des durch dieses Display emittierten Lichts leicht bestimmen lässt, da solche Displays üblicherweise sowieso Polarisatoren aufweisen und damit polarisiertes Licht bereitstellen. Die Bezeichnung p-Polarisation bezieht sich hierbei auf die Einfallsebene, in welcher das durch die Bildgebeeinheit 4 bereitgestellte Licht P auf das Deckelement 6 einfällt. Die Einfallsebene ist dabei durch die Einfallsrichtung des Lichts P sowie durch den Normalenvektor des Deckelements 6 am Punkt, an welchem das Licht auf das Deckelement 6 auftrifft, definiert. Insbesondere kann sich diese Definition auch auf einen gemittelten optischen Pfad der einzelnen Lichtstrahlen beziehen. Die Vorteile der Bereitstellung von p-polarisiertem Licht P durch die Bildgebeeinheit sind in Fig. 2 grafisch veranschaulicht.

Fig. 2 zeigt dabei eine grafische Darstellung des Transmissionsverhaltens von p-polarisiertem Licht im Vergleich zu s-polarisiertem Licht am Deckelement 6 für verschiedene Einfallswinkel α. Insbesondere ist hier an der Ordinate des dargestellten Koordinatensystems die Transmissionsintensität IT aufgetragen und an der Abszisse der Einfallswinkel α in der Einheit Grad. Eine Transmissionsintensität IT von 1, 0 bedeutet eine 100-prozentige Transmission. Die Kurve 8P beschreibt das Transmissionsverhalten von p-polarisiertem Licht, während die Kurve 8S das Transmissionsverhalten von s-polarisiertem Licht beschreibt. Die Kopf-oben-Anzeigevorrichtung 3 ist dabei vorzugsweise so eingerichtet, dass das von der Bildgebeeinheit 4 bereitgestellte p-polarisierte Licht P, zumindest im Mittel, in einem Winkel α auf das Deckelement 6 auftrifft (vergleiche auch Fig. 1), welcher im Bereich zwischen 30° und 60°, vorzugsweise zwischen 30 und 50°, liegt. Exemplarisch ist hier in Fig. 2 ein Einfallswinkelbereich 9 zwischen 36° und 57° durch gestrichelte Linien hervorgehoben. Wie in Fig. 2 zu sehen ist, unterscheidet sich das Transmissionsverhalten von p-polarisiertem Licht deutlich vom Transmissionsverhalten von s-polarisiertem Licht in diesem Bereich. Insbesondere wird s-polarisiertes Licht in diesem Bereich mit bis zu fast 20 % reflektiert, das heißt es werden nur etwas mehr als 80 % transmittiert. Dagegen kann p-polarisiertes Licht in diesem Bereich eine Transmission von über 99 % erreichen. Fällt das Licht beispielsweise in einem Winkel von 45° auf das Deckelement 6 ein, so beträgt die Transmission von s-polarisiertem Licht lediglich 90 %, während die Transmission von p-polarisiertem Licht bei 99 % liegt. Durch die Bereitstellung von p-polarisiertem Licht P durch die Bildgebeeinheit 4 lassen sich somit die Lichtverluste enorm reduzieren.

Diese Tatsache, dass p-polarisiertes Licht P deutlich besser transmittiert wird, würde sich jedoch nachteilig für die gewünschte möglichst hohe Reflexion an der Windschutzscheibe 2 auswirken. Dem wird vorteilhafterweise dadurch entgegengewirkt, dass das Deckelement 6 dazu ausgebildet ist, dass p-polarisierte Licht P zumindest zum Großteil in s-polarisiertes Licht S zu wandeln. In einer nicht beanspruchten Ausgestaltung, kann das Deckelement 6 beispielsweise als ein Grundelement mit einer polarisationswandelnden Beschichtung, wie beispielsweise einer auflaminierten λ/2-Verzögerungsfolie, ausgebildet sein, wie beispielsweise ITOS WP280HE. Auch können als Verzögerungsfolien PC-Folien verwendet werden, da diese bedingt durch ihren Herstellungsprozess ebenfalls die Eigenschaft zum Drehen der Polarisation aufweisen, da durch das Extrudieren/Recken der Folien eine Ausrichtung der Moleküle entsteht, die zu diesem Effekt führt. Das Grundelement kann beispielsweise ebenfalls aus Polycarbonat sein. Nicht beansprucht ist, wenn das Grundelement dann beispielsweise aus PMMA gebildet ist, dass PMMA keine Eigenspannungen aufweist und daher die Polarisation nicht beeinflusst. Gemäß der Erfindung ist das Deckelement 6 als Ganzes als Polarisationswandler, wie beispielsweise als λ/2-Verzögerungsfolie, als PC-Folie, ausgebildet. Dies ermöglicht eine besonders einfache und kostengünstige Herstellung des Deckelements 6. Zudem bildet eine Folie, zum Beispiel mit einer Dicke zwischen 200 µm und 400 µm, einerseits genügend Stabilität und andererseits genügend Flexibilität, um zum Beispiel das Deckelement 6 gekrümmt ausbilden zu können.

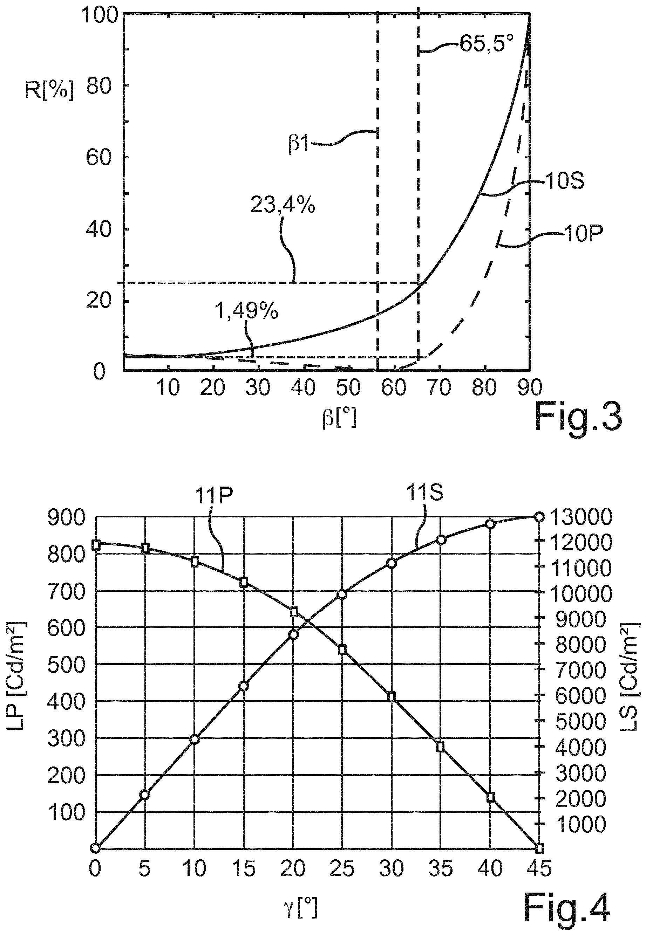

Durch diese erfinderische Ausbildung des Deckelements 6 mit polarisationswandelnder Eigenschaften, die es ermöglichen, das eingestrahlte p-polarisierte Licht P in s-polarisiertes Licht S zu wandeln, kann die Lichteffizienz der Kopf-oben-Anzeigevorrichtung 3 weiter gesteigert werden. Dies soll durch Fig. 3 veranschaulicht werden.

Fig. 3 zeigt dabei eine grafische Darstellung des Reflexionsverhaltens von s-polarisiertem und p-polarisiertem Licht bei der Reflexion an der Windschutzscheibe 2 in Abhängigkeit des Einfallswinkels β (vergleiche auch Fig. 1). Hierbei ist an der Koordinate die Reflexion R in Prozent und an der Abszisse der Einfallswinkel β in Grad aufgetragen. Die Kurve 10S beschreibt das Reflexionsverhalten von s-polarisiertem Licht, während die Kurve 10P das

Reflexionsverhalten von p-polarisiertem Licht beschreibt. Zudem wurde in dieser grafischen Darstellung in Fig. 3 ein Brechungsindex der Luft von 1 und ein Brechungsindex der Windschutzscheibe von 1,5 angenommen.

Die Kopf-oben-Anzeigevorrichtung 3 ist vorzugsweise so ausgelegt beziehungsweise derart im Kraftfahrzeug 1 in Bezug auf die Windschutzscheibe 2 angeordnet, dass das aus dem Gehäuse 5 durch das Deckelement austretende, zum Großteil s-polarisierte Licht in einem Einfallswinkel β auf die Windschutzscheibe 2 trifft, welcher vorzugsweise in einem Bereich zwischen 60° und 70° liegt. In Fig. 3 ist weiterhin ein Zahlenbeispiel für einen Einfallswinkel β von 65,5° dargestellt. Für diesen Einfallswinkel wird s-polarisiertes Licht, repräsentiert durch die Kurve 10S zu 23,4 % reflektiert, während das p-polarisierte Licht, repräsentiert durch die Kurve 10P, nur zu 1,49 % reflektiert wird. Weiterhin dargestellt in Fig. 3 ist auch der Brewster-Winkel β1, für welche die Reflexion von p-polarisiertem Licht bei Null liegt. Da also der Einfallswinkel β des Lichts auf die Windschutzscheibe 2 typischerweise in einem Bereich sehr nahe am Brewster-Winkel β1 liegt, ergibt sich in diesem Winkelbereich ein sehr schlechtes Reflexionsverhalten für p-polarisiertes Licht. S-polarisiertes Licht S dagegen wird deutlich besser reflektiert, weshalb die Wandlung des p-polarisierten Lichts P in s-polarisiertes Licht S durch das Deckelement 6 der Kopf-oben-Anzeigevorrichtung 3 besonders vorteilhaft ist. So lassen sich insgesamt zum einen durch die Bereitstellung von p-polarisiertem Licht durch die Bildgebeeinheit 4 und zum anderen durch die Wandlung dieses p-polarisierten Lichts P in zum Großteil s-polarisiertes Licht S enorme Vorteile in Bezug auf die Lichteffizienz erzielen.

Gemäß einer ersten Ausführungsform der Erfindung ist es dabei bevorzugt, dass möglichst viel des auf das Deckelement 6 eingestrahlten p-polarisierten Lichts P in s-polarisiertes Licht S gewandelt wird, da hierdurch die Lichteffizienz maximiert wird. In einer weiteren Ausführungsform der Erfindung ist es bevorzugt, dass ein bestimmter Anteil des p-polarisierten Lichts P auch nach Transmission durch das Deckelement 6 verbleibt. Dies hat folgenden Hintergrund: Dies ermöglicht nämlich die Sichtbarkeit des virtuellen Bildes mit polarisierenden Sonnenbrillen. Typischerweise wird von polarisierenden Sonnenbrillen an der Windschutzscheibe 2 reflektiertes und s-polarisiertes Licht absorbiert, sodass das virtuelle durch den Endbenutzer nicht mehr sichtbar ist. Dadurch, dass gemäß dieser Ausführungsform ein zumindest kleiner Anteil p-polarisierten Lichts verbleibt, wird eine geringe Sichtbarkeit des virtuellen Bildes auch mit polarisierenden Sonnenbrillen ermöglicht.

Wieviel des auf das Deckelement 6 auftreffenden p-polarisierten Lichts in s-polarisiertes Licht S gewandelt wird, hängt von der Orientierung des Deckelements, insbesondere seiner optischen Achse beziehungsweise schnellen Achse mit Bezug auf die Lichteinfallsebene ab. Fig. 4 zeigt eine grafische Darstellung der resultierenden Leuchtdichte von s-polarisiertem und p-polarisiertem Licht in Abhängigkeit von dem Orientierungswinkel γ der optischen Achse des Polarisationswandlers des Deckelements 6, d.h. des Deckelements 6 selbst wenn dieses als Ganzes als Polarisationswandler ausgebildet ist oder der polarisationswandelnden Beschichtung, mit Bezug auf die Lichteinfallsebene.

Diese grafische Darstellung der Leuchtdichte, die für p-polarisiertes Licht mit LP und für s-polarisiertes Licht mit LS bezeichnet ist, und die in den Einheiten Cd/m² angegeben ist, bezieht sich auf die resultierende Leuchtdichte nach Reflexion an der Windschutzscheibe 2, sodass die entsprechenden Reflexionsgrade der Windschutzscheibe 2 ebenfalls bereits berücksichtigt sind. Die linke Skala bezieht sich dabei auf die Leuchtdichte des p-polarisierten Lichts, während sich die rechte Skala der Leuchtdichte dass s-polarisiertem Licht bezieht. Weiterhin bezeichnet die Kurve 11 P den Verlauf der Leuchtdichte für p-polarisiertes Licht und die Kurve 11 S die Leuchtdichte für s-polarisiertes Licht. Bei einem Orientierungswinkel γ von 45° kann das auf das Deckelement 6 auftreffende p-polarisierte Licht P vollständig in s-polarisiertes Licht S gewandelt werden, während bei einem Orientierungswinkel von 0°, keine Wandlung des p-polarisierten Lichts P erfolgt.

Wird also beispielsweise das Deckelement 6 derart orientiert, dass die optische Achse des Polarisators in Bezug auf die Lichteinfallsebene einen Winkel von 45° aufweist, wird das auftreffende p-polarisierte Licht P vollständig in s-polarisiertes Licht S gewandelt und für eine gegebene Displaybeleuchtung der Bildgebeeinheit 4 ergibt sich eine nach Reflexion an der Windschutzscheibe 2 resultierende Leuchtdichte von 13 000 Cd/m². Ist das Deckelement 6 dagegen so orientiert, dass die optische Achse des Polarisationswandlers mit der Lichteinfallsebene einen Winkel von 40° einschließt, so wird nur ein Teil des auftreffenden p-polarisierten Lichts, jedoch immer noch ein deutlicher Großteil, in s-polarisiertes Licht S gewandelt, während jedoch ein Anteil an p-polarisiertem Licht P verbleibt. In diesem Beispiel ergibt sich für diesen Winkel γ eine Leuchtdichte des s-polarisierten Lichts S nach Reflexion an der Windschutzscheibe 2 von 12 800 Cd/m² und eine Leuchtdichte des p-polarisierten Lichts von 150 Cd/m², und somit eine Gesamt-Leuchtdichte von 12 950 Cd/m². Diese ist also gegenüber der ersten Orientierung des Deckelements mit einem 45° Winkel verringert. Um nun diese in dem ersten Beispiel genannte Leuchtdichte von 13.000 Cd/m² auch in dem zweiten Beispiel beizubehalten, müsste die TFT-Beleuchtung heller werden und mehr Wärme muss abgeleitet werden. Dies veranschaulicht die optimale Orientierung in Bezug auf die Lichteffizienz bei einem Orientierungswinkel γ von 45°. Für das vorher genannte Beispiel einer polarisierenden Sonnenbrille ist es jedoch auch vorteilhaft, zumindest einen geringen Anteil an p-polarisierten Licht nach Durchgang durch das Deckelement 6 beizubehalten.

Insgesamt werden so eine Kopf-oben-Anzeigevorrichtung, ein Kraftfahrzeug und ein Verfahren bereitgestellt, welche eine deutliche Effizienzsteigerung durch die Reduktion von Lichtverlusten auf ein Minimum mit besonders einfachen Maßnahmen ermöglichen.

## Patentansprüche

1. Kopf-oben-Anzeigevorrichtung (3) für ein Kraftfahrzeug, aufweisend:
- eine Bildgebeeinheit (4), welche zum Bereitstellen einer Anzeige dazu ausgelegt ist, Licht (P) zu emittieren;
- ein Gehäuse (5), in welchem die Bildgebeeinheit (4) angeordnet ist,
- wobei das Gehäuse (5) ein transparentes Deckelement (6) aufweist, welches zur Transmission des durch die Bildgebeeinheit (4) emittierten Lichtes ausgebildet ist, und
- wobei die Kopf-oben-Anzeigevorrichtung (3) derart eingerichtet ist, dass zum Anzeigen der durch die Bildgebeeinheit (4) bereitgestellten Anzeige das von der Bildgebeeinheit (4) emittierte Licht (P) zumindest zum Teil durch das Deckelement (6) transmittiert wird, und
- wobei die Bildgebeeinheit (4) dazu ausgebildet ist, zum Bereitstellen der Anzeige das Licht (P) zumindest zum Großteil als p-polarisiertes Licht (P) mit Bezug auf das Deckelement (6) zu emittieren, wobei das Deckelement (6) dazu ausgebildet ist, das von der Bildgebeeinheit (4) emittierte p-polarisierte Licht (P) beim Transmittieren zumindest zum Großteil in s-polarisiertes Licht (S) zu wandeln, und
**dadurch gekennzeichnet, dass**
das Deckelement (6) als Ganzes als Polarisationswandler als Polycarbonat-Folie ausgebildet ist.

2. Kopf-oben-Anzeigevorrichtung (3) nach einem der vorhergehenden Ansprüche, **dadurch gekennzeichnet, dass**
das Deckelement (6) in einer Lichttransmissionsrichtung, in welcher das durch die Bildgebeeinheit (4) emittierte Licht (P) durch das Deckelement (6) transmittiert wird, eine Dicke zwischen 200 µm und 400 µm aufweist.

3. Kopf-oben-Anzeigevorrichtung (3) nach einem der Ansprüche 1 bis 2,
**dadurch gekennzeichnet, dass**
das Deckelement (6) in einer ersten Orientierung mit Bezug auf eine Lichteinfallsebene orientiert ist, so dass eine optische Achse und/oder schnelle Achse des Polarisationswandlers um einen vorbestimmten ersten Winkel (γ) in einem Winkelbereich zwischen 40 Grad und 50 Grad, besonders bevorzugt 45 Grad, gegenüber der Lichteinfallsebene geneigt ist.

4. Kopf-oben-Anzeigevorrichtung (3) nach einem der vorhergehenden Ansprüche, **dadurch gekennzeichnet, dass**
das Deckelement (6) in einer zweiten Orientierung mit Bezug auf eine Lichteinfallsebene orientiert ist, so dass eine optische Achse und/oder schnelle Achse des Polarisationswandlers um einen vorbestimmten zweiten Winkel (γ) in einem Winkelbereich zwischen 30 Grad und 40 Grad oder zwischen 50 Grad und 60 Grad gegenüber der Lichteinfallsebene geneigt ist.

5. Kopf-oben-Anzeigevorrichtung (3) nach einem der vorhergehenden Ansprüche, **dadurch gekennzeichnet, dass**
die Kopf-oben-Anzeigevorrichtung (3) derart eingerichtet ist, dass das von der Bildgebeeinheit (4) emittierte Licht (P) in einem Einfallswinkel (α) zwischen 30 Grad und 50 Grad auf das Deckelement (6) auftrifft.

6. Kopf-oben-Anzeigevorrichtung (3) nach einem der vorhergehenden Ansprüche, **dadurch gekennzeichnet, dass**
die Kopf-oben-Anzeigevorrichtung (3) zumindest ein optisches Element (7), insbesondere mindestens einen Reflektor (7), aufweist, welches sich in einem optischen Pfad von der Bildgebeeinheit (4) zum Deckelement (6) befindet, wobei das zumindest eine optische Element (7) derart ausgebildet ist, dass die Polarisation des von der Bildgebeeinheit (4) emittierten p-polarisierten Lichts zumindest zum Großteil beim Durchlaufen des optischen Pfads erhalten bleibt.

7. Kraftfahrzeug (1) mit einer Kopf-oben-Anzeigevorrichtung (3) nach einem der vorhergehenden Ansprüche.

8. Kraftfahrzeug (1) nach Anspruch 7,
**dadurch gekennzeichnet, dass**
das Kraftfahrzeug eine Windschutzscheibe (2) aufweist, und die Kopf-oben-Anzeigevorrichtung (3) derart im Kraftfahrzeug (1) angeordnet ist, dass das von der Bildgebeeinheit (4) emittierte und durch das Deckelement (6) transmittierte Licht (P, S) auf die Windschutzscheibe (2) trifft und zumindest zum Teil von dieser reflektiert wird.

9. Kraftfahrzeug nach Anspruch 7,
**dadurch gekennzeichnet, dass**
die Kopf-oben-Anzeigevorrichtung (3) derart im Kraftfahrzeug angeordnet ist, dass das von der Bildgebeeinheit (4) emittierte und durch das Deckelement (6) transmittierte Licht (P, S) zumindest zum Großteil in einem Einfallswinkel (β) zwischen 60 Grad und 70 Grad auf die Windschutzscheibe trifft.

10. Verfahren zum Anzeigen einer Anzeige in einem Kraftfahrzeug mittels einer Kopf-oben-Anzeigevorrichtung (3), wobei eine in einem Gehäuse (5) der Kopf-oben-Anzeigevorrichtung (3) angeordnete Bildgebeeinheit (4) zum Bereitstellen der Anzeige Licht (P) emittiert, welches durch ein transparentes Deckelement (6) des Gehäuses (5) zumindest zum Teil transmittiert wird,
wobei die Bildgebeeinheit (4) zum Bereitstellen der Anzeige das Licht (P) zumindest zum Großteil als p-polarisiertes Licht (P) emittiert und das Deckelement (6) das von der Bildgebeeinheit (4) emittierte p-polarisierte Licht (P) beim Transmittieren zumindest zum Großteil in s-polarisiertes Licht (S) wandelt,
**dadurch gekennzeichnet, dass**
das Deckelelement als Ganzes als Polarisationswandler als Polycarbonat-Folie vorgesehen wird.

## Claims

1. Head-up display device (3) for a motor vehicle, comprising:
- an image generating unit (4) designed to emit light (P) for the purpose of providing a display;
- a housing (5), in which the image generating unit (4) is arranged,
- the housing (5) having a transparent cover element (6) configured for transmitting the light emitted by the image generating unit (4), and
- the head-up display device (3) being set up in such a way that for the purpose of displaying the display provided by the image generating unit (4), the light (P) emitted by the image generating unit (4) is at least partly transmitted through the cover element (6), and
- the image generating unit (4) being configured, for the purpose of providing the display, to emit the light (P) at least for the most part as p-polarized light (P) with respect to the cover element (6), the cover element (6) being configured to convert the p-polarized light (P) emitted by the image generating unit (4) at least for the most part into s-polarized light (S) during transmission, and
**characterized in that**
the cover element (6) as a whole as a polarization converter is configured as a polycarbonate film.

2. Head-up display device (3) according to any of the preceding claims,
**characterized in that**
the cover element (6) has a thickness of between 200 µm and 400 µm in a light transmission direction in which the light (P) emitted by the image generating unit (4) is transmitted through the cover element (6).

3. Head-up display device (3) according to either of Claims 1 and 2,
**characterized in that**
the cover element (6) is oriented in a first orientation with respect to a light incidence plane, an optical axis and/or fast axis of the polarization converter thereby being inclined by a predetermined first angle (γ) in an angular range of between 40 degrees and 50 degrees, particularly preferably 45 degrees, relative to the light incidence plane.

4. Head-up display device (3) according to any of the preceding claims,
**characterized in that**
the cover element (6) is oriented in a second orientation with respect to a light incidence plane, an optical axis and/or fast axis of the polarization converter thereby being inclined by a predetermined second angle (γ) in an angular range of between 30 degrees and 40 degrees, or between 50 degrees and 60 degrees, relative to the light incidence plane.

5. Head-up display device (3) according to any of the preceding claims,
**characterized in that**
the head-up display device (3) is set up in such a way that the light (P) emitted by the image generating unit (4) impinges on the cover element (6) at an angle (a) of incidence of between 30 degrees and 50 degrees.

6. Head-up display device (3) according to any of the preceding claims,
**characterized in that**
the head-up display device (3) comprises at least one optical element (7), in particular at least one reflector (7), which is situated in an optical path from the image generating unit (4) to the cover element (6), the at least one optical element (7) being configured in such a way that the polarization of the p-polarized light emitted by the image generating unit (4) is maintained at least for the most part upon passing through the optical path.

7. Motor vehicle (1) comprising a head-up display device (3) according to any of the preceding claims.

8. Motor vehicle (1) according to Claim 7, **characterized in that**
the motor vehicle comprises a windscreen (2), and the head-up display device (3) is arranged in the motor vehicle (1) in such a way that the light (P, S) emitted by the image generating unit (4) and transmitted through the cover element (6) impinges on the windscreen (2) and is at least partly reflected by the latter.

9. Motor vehicle according to Claim 7,
**characterized in that**
the head-up display device (3) is arranged in the motor vehicle in such a way that the light (P, S) emitted by the image generating unit (4) and transmitted through the cover element (6) impinges on the windscreen at least for the most part at an angle (β) of incidence of between 60 degrees and 70 degrees.

10. Method for displaying a display in a motor vehicle by means of a head-up display device (3), an image generating unit (4) arranged in a housing (5) of the head-up display device (3), for the purpose of providing the display, emitting light (P) which is at least partly transmitted through a transparent cover element (6) of the housing (5),
the image generating unit (4), for the purpose of providing the display, emitting the light (P) at least for the most part as p-polarized light (P) and the cover element (6) converting the p-polarized light (P) emitted by the image generating unit (4) at least for the most part into s-polarized light (S) during transmission, **characterized in that**
the cover element as a whole as a polarization converter is provided as a polycarbonate film.

## Revendications

1. Dispositif d'affichage tête haute (3) pour un véhicule automobile, présentant :
- une unité d'imagerie (4) qui est configurée pour émettre de la lumière (P) afin de fournir un affichage ;
- un boîtier (5) dans lequel est disposée l'unité d'imagerie (4),
- dans lequel le boîtier (5) présente un cache (6) transparent qui est réalisé pour transmettre la lumière émise par l'unité d'imagerie (4), et
- dans lequel le dispositif d'affichage tête haute (3) est conçu de telle sorte que la lumière (P) émise par l'unité d'imagerie (4) est transmise au moins en partie à travers le cache (6) afin d'afficher l'affichage fourni par l'unité d'imagerie (4), et
- dans lequel l'unité d'imagerie (4) est réalisée pour émettre la lumière (P) au moins en majeure partie sous forme de lumière polarisée p (P) par rapport au cache (6) afin de fournir l'affichage, dans lequel le cache (6) est réalisé pour convertir au moins en majeure partie la lumière polarisée p (P) émise par l'unité d'imagerie (4) en lumière polarisée s (S) lors de la transmission, et **caractérisé en ce que**
le cache (6) est réalisé dans son ensemble de convertisseur de polarisation sous forme de feuille de polycarbonate.

2. Dispositif d'affichage tête haute (3) selon l'une quelconque des revendications précédentes,
**caractérisé en ce que**
le cache (6) présente une épaisseur comprise entre 200 µm et 400 um dans une direction de transmission de lumière dans laquelle la lumière (P) émise par l'unité d'imagerie (4) est transmise à travers le cache (6).

3. Dispositif d'affichage tête haute (3) selon l'une quelconque des revendications 1 à 2,
**caractérisé en ce que**
le cache (6) est orienté dans une première orientation par rapport à un plan d'incidence de lumière de sorte qu'un axe optique et/ou un axe rapide du convertisseur de polarisation est incliné selon un premier angle (γ) prédéterminé dans une plage d'angle entre 40 degrés et 50 degrés, de manière particulièrement préférée de 45 degrés, par rapport au plan d'incidence de lumière.

4. Dispositif d'affichage tête haute (3) selon l'une quelconque des revendications précédentes,
**caractérisé en ce que**
le cache (6) est orienté dans une deuxième orientation par rapport à un plan d'incidence de lumière de sorte qu'un axe optique et/ou un axe rapide du convertisseur de polarisation est incliné selon un deuxième angle (γ) prédéterminé dans une plage d'angle entre 30 degrés et 40 degrés, ou entre 50 degrés et 60 degrés, par rapport au plan d'incidence de lumière.

5. Dispositif d'affichage tête haute (3) selon l'une quelconque des revendications précédentes,
**caractérisé en ce que**
le dispositif d'affichage tête haute (3) est conçu de telle sorte que la lumière (P) émise par l'unité d'imagerie (4) est incidente sur le cache (6) selon un angle d'incidence (α) compris entre 30 degrés et 50 degrés.

6. Dispositif d'affichage tête haute (3) selon l'une quelconque des revendications précédentes,
**caractérisé en ce que**
le dispositif d'affichage tête haute (3) présente au moins un élément optique (7), en particulier au moins un réflecteur (7), qui se trouve dans un chemin optique de l'unité d'imagerie (4) jusqu'au cache (6), dans lequel ledit au moins un élément optique (7) est réalisé de telle sorte que la polarisation de la lumière polarisée p émise par l'unité d'imagerie (4) est conservée au moins en majeure partie lors du passage par le chemin optique.

7. Véhicule automobile (1), comprenant un dispositif d'affichage tête haute (3) selon l'une quelconque des revendications précédentes,

8. Véhicule automobile (1) selon la revendication 7, **caractérisé en ce que**
le véhicule automobile présente un pare-brise (2), et le dispositif d'affichage tête haute (3) est disposé dans le véhicule automobile (1) de telle sorte que la lumière (P, S) émise par l'unité d'imagerie (4) et transmise à travers le cache (6) est incidente sur le pare-brise (2) et est au moins en partie réfléchie par celui-ci.

9. Véhicule automobile selon la revendication 7, **caractérisé en ce que**
le dispositif d'affichage tête haute (3) est disposé dans le véhicule automobile de telle sorte que la lumière (P, S) émise par l'unité d'imagerie (4) et transmise à travers le cache (6) est incidente en majeure partie sur le pare-brise selon un angle d'incidence (β) compris entre 60 degrés et 70 degrés.

10. Procédé permettant d'afficher un affichage dans un véhicule automobile au moyen d'un affichage tête haute (3), dans lequel une unité d'imagerie (4) disposée dans un boîtier (5) du dispositif d'affichage tête haute (3) émet de la lumière (P) qui est au moins en partie transmise à travers un cache transparent (6) du boîtier (5) afin de fournir l'affichage,
dans lequel l'unité d'imagerie (4) émet la lumière (P) au moins en majeure partie sous forme de lumière polarisée p (P) afin de fournir l'affichage, et le cache (6) convertit la lumière polarisée p (P) émise par l'unité d'imagerie (4) au moins en majeure partie en lumière polarisée s (S),
**caractérisé en ce que**
le cache est prévu dans son ensemble de convertisseur de polarisation sous forme de feuille de polycarbonate.
